# EUROPÄISCHE PATENTSCHRIFT

(11) **EP 3 103 149 B1**
(45) Veröffentlichungstag und Bekanntmachung des Hinweises auf die Patenterteilung: **18.04.2018**
(21) Anmeldenummer: 15703006.5
(22) Anmeldetag: 23.01.2015
(51) Int. Cl.: H01M 4/133, H01M 4/134, H01M 4/36, H01M 4/38, H01M 4/587, C01B 32/05, C01B 32/20

(54) **SI/G/C-KOMPOSITE FÜR LITHIUM-IONEN-BATTERIEN**
SI/G/C-COMPOSITES FOR LITHIUM-ION-BATTERIES
COMPOSITES SI/G/C POUR BATTERIES LITHIUM-IONS

(30) Priorität: 06.02.2014 DE 102014202156
(43) Veröffentlichungstag der Anmeldung: 14.12.2016
(73) Patentinhaber: Wacker Chemie AG, 81737 München (DE)
(72) Erfinder: TROEGEL, Dennis, 91242 Ottensoos (DE); GIGLER, Peter, 85221 Dachau (DE); HANELT, Eckhard, 82269 Geltendorf (DE); HAUFE, Stefan, 85579 Neubiberg (DE)
(74) Vertreter: Ege, Markus
(86) Internationale Anmeldenummer: PCT/EP2015/051324
(87) Internationale Veröffentlichungsnummer: WO 2015/117838

(56) Entgegenhaltungen:
- EP-A1- 2 387 089
- EP-A1- 2 573 845
- EP-A1- 2 782 167
- EP-A2- 1 702 375
- DE-A1-102009 033 739
- DE-T5-112012 001 289
- US-A1- 2002 164 479
- KHOMENKO ET AL: "Lithium-ion batteries based on carbon-silicon-graphite composite anodes", JOURNAL OF POWER SOURCES, ELSEVIER SA, CH, Bd. 165, Nr. 2, 28. Februar 2007 (2007-02-28), Seiten 598-608, XP005914502, ISSN: 0378-7753, DOI: 10.1016/J.JPOWSOUR.2006.10.059

## Beschreibung

Die Erfindung betrifft Silicium/Graphit/Kohlenstoff-Komposite (Si/G/C-Komposite), ein Verfahren zu deren Herstellung und deren Verwendung als Elektrodenaktivmaterial in Lithium-Ionen-Batterien.

Wiederaufladbare Lithium-Ionen-Batterien sind heutzutage die kommerzialisierten elektrochemischen Energiespeicher mit den höchsten Energiedichten von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird vor allem graphitischer Kohlenstoff verwendet. Der graphitische Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. Ein wesentliches Argument für die Verwendung von graphitischem Kohlenstoff in negativen Elektrodenmaterialien liegt in den geringen Volumenänderungen des Wirtsmaterials, die mit der Ein- und Auslagerung von Lithium verbunden sind, d.h. die Elektrode bleibt annähernd stabil. So lässt sich für die Lithiumeinlagerung in graphitischem Kohlenstoff nur eine Volumenzunahme von ca. 10% für die Grenzstöchiometrie von LiC₆ messen. Nachteilig ist jedoch seine relativ niedrige elektrochemische Kapazität von theoretisch 372 mAh/g, die nur etwa ein Zehntel der mit Lithiummetall theoretisch erreichbaren elektrochemischen Kapazität entspricht.

In Anoden für Lithium-Ionen-Batterien, in denen das Elektrodenaktivmaterial auf Silicium (als Material mit der höchsten bekannten Speicherkapazität für Lithium-Ionen; 4199 mAh/g) basiert, kann das Silicium beim Laden bzw. Entladen mit Lithium eine extreme Volumenänderung von bis ca. 300% erfahren. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Verlust an mobilem Lithium führt.

Um das Problem der starken Volumenausdehnung des Aktivmaterials und der SEI-Bildung in Si-haltigen Anoden zu lösen, wurden in den letzten zehn Jahren verschiedene Ansätze zur elektrochemischen Stabilisierung Si-haltiger Elektrodenaktivmaterialien verfolgt (Eine Übersicht geben A. J. Appleby et al., J. Power Sources 2007, 163, 1003-1039).

Eine mögliche Lösung besteht darin, das Silicium-haltige Aktivmaterial nicht in reiner Form, sondern in Kombination mit Kohlenstoff einzusetzen. Dabei besteht zum einen die Möglichkeit, das Si-haltige Aktivmaterial in Form einer physikalischen Mischung mit Graphit in die Elektrodenbeschichtung einzusetzen (vgl. EP 1730800 B1), oder die beiden Elemente Silicium und Kohlenstoff strukturell in Form eines KompositMaterials zu verbinden (Eine Übersicht geben M. Rossi et al., J. Power Sources 2014, 246, 167-177).

Graphit und strukturverwandte Kohlenstoffe sind relativ weich, elektrisch sehr gut leitfähig, besitzen eine geringe Masse und zeichnen sich durch eine geringe Volumenänderung beim Laden/Entladen aus. Aus diesen Gründen weisen Kohlenstoff-basierte Anoden bekanntermaßen eine sehr gute elektrochemische Stabilität von mehreren hundert Zyklen auf. Durch Kombination der Vorteile der beiden Elemente (Silicium (Si) mit großer Kapazität, Graphit (G) bzw. amorpher Kohlenstoff (C) mit hoher Stabilität) besitzen Elektrodenaktivmaterialien auf Basis von Si/C- bzw. Si/G/C-Kompositen bei im Vergleich zu reinem Graphit erhöhter Kapazität ein stabileres Zyklenverhalten als das reine Silicium.

Solche Komposite können nach EP 1363341 A2 durch chemische Gasphasenabscheidung von Kohlenstoff auf Silicium hergestellt werden.

Ebenso ist bekannt, Si/C-Komposite durch reaktives Vermahlen von Silicium mit Kohlenstoff oder mit Kohlenstoffprecursoren und anschließender Carbonisierung zu erzeugen, siehe z.B. US 20040137327 A1.

Auch das Einbetten von Silicium-Partikeln in eine organische C-Precursormatrix mit anschließender Carbonisierung führt zu Si/C- bzw. Si/G/C-Kompositen, siehe z. B. US 20050136330 A1. Dabei kommen als C-Precursoren vor allem Kohlenwasserstoffe, Kohlenhydrate und eine Vielzahl von Polymeren in Betracht, die je nach ihrer Zusammensetzung und Struktur zu graphitisierbaren (Soft-Carbon) oder nichtgraphitisierbaren Kohlenstoffen (Hard-Carbon) führen.

Im Folgenden wird unterschieden zwischen Kompositen, die nur nanoskaliges Silicium, eingebettet in einer amorphem Kohlenstoff-Matrix beinhalten (Si/C-Komposite) und Materialien, die zusätzlich einen oder mehrere kristalline GraphitKerne innerhalb einer Si/C-Hülle enthalten (Si/G/C-Komposite). Insbesondere der Gehalt von Graphit hat sich in verschiedenen Offenbarungen positiv auf die Leitfähigkeit und Strukturstabilität ausgewirkt, vgl. z. B. EP 2573845 A1.

Weiterhin wird in dieser Erfindung unterschieden, ob das nanoskalige Silicium in der umgebenden C-Matrix in Form von "Aggregaten" vorliegt (d. h. nanoskalige Primärpartikel sind fest miteinander verwachsen, z. B. über Sinterhälse, und lassen sich nicht mehr voneinander trennen) oder in Form nicht-aggregierter isolierter Einzelpartikel, die gegebenenfalls lockere Partikelverbunde ("Agglomerate") bilden können.

Si/C-Komposite enthaltend aggregierte Si-Nanopartikel sind beispielsweise in der WO 2013031993 A1 beschrieben, wobei die Herstellung über eine C-Beschichtung eines aggregierten Si-Ausgangsmaterials erfolgt.

Auch Si/C-Komposite mit nicht-aggregiertem Silicium sind bekannt. Der Einsatz eines nicht-aggregierten nanoskaligen Silicium-Pulvers in der Polykondensation mono- und/oder polyhydroxyaromatischer Verbindungen mit einem Aldehyd bei Anwesenheit eines Katalysators und anschließender Carbonisierung zur Herstellung nanostrukturierter Si/C-Komposite ist in WO 2010006763 A1 beschrieben.

Die CA 2752844 A1 offenbart ein Verfahren zur C-Beschichtung von Si- und SiOx-Partikeln, wobei die erhaltenen Kompositpartikel einen hohen Anteil von mindestens 50% der eingebetteten nanoskaligen Si-Partikel als nicht-aggregiert oder nichtversintert enthalten. Ein Nachteil der hier genannten Si/C-Komposite ist, dass diese keinen Graphit zur Verbesserung der Leitfähigkeit und Strukturstabilität enthalten.

Weiterhin sind die beschriebenen C-Gehalte sehr niedrig (<30%), so dass die C-Beschichtung zwar die Leitfähigkeit der Silicium-Oberfläche verbessert, aber keine stabilisierende Wirkung in Bezug auf die Volumenausdehnung der Silicium-Partikel besitzt.
Si/G/C-Komposite, wie in der US 20130302675A1 beansprucht, beinhalten einen (porösen) Graphit-Kern und auf der Oberfläche aggregierte Si-Partikel, welche mit amorphem Kohlenstoff beschichtet sind. Ein möglicher Nachteil dieses Komposits besteht darin, dass es nur wenig amorphen Kohlenstoff (1-10%) zwischen den Si-Partikeln aufweist, wodurch keine ausreichende Stabilität durch Abpufferung der Volumenänderung des Siliciums gewährleistet werden kann. Weiterhin enthalten die in der US 20130302675A1 beschriebenen Komposite nur sehr niedrige Silicium-Gehalte von ∼5% und damit elektrochemische Kapazitäten, welche nur knapp oberhalb derjenigen von Graphit sind (∼400 mAh/g) und für die meisten angestrebten Anwendungen nicht relevant sind.
In CN 101210112 A ist beschrieben, wie die Aggregation der Si-Partikel durch Einbettung in eine organische Polymerbeschichtung auf einem Graphit-Kern reduziert wird (Dabei wird die Beschichtung jedoch nicht zu anorganischem Kohlenstoff carbonisiert, was mögliche Nachteile in Bezug auf Leitfähigkeit und mechanische Festigkeit mit sich bringt). Es hat sich gezeigt, dass diese Strukturen hinsichtlich Leitfähigkeit und mechanische Festigkeit nachteilig sind. Das Dokument US 2002/164479 A1 offenbart aus dem Stand der Technik bekannte Silicium/Graphit/Kohlenstoffkomposite. Die Aufgabe der vorliegenden Erfindung war es, ein Elektrodenaktivmaterial auf Basis eines Silicium/Kohlenstoff-Komposits bereitzustellen, das eine hohe reversible Kapazität von mind. 1000 mAh/g aufweist, sich durch ein stabileres Zyklenverhalten als vergleichbare bekannte Komposite auszeichnet und die durch die Silicium-Partikel bereitgestellte hohe elektrochemische Kapazität besser nutzt.
Diese Aufgabe wird gelöst durch ein Si/G/C-Komposit, enthaltend Graphit (G) und nicht-aggregierte, nanoskalige Silicium-Partikel (Si), wobei die Silicium-Partikel in eine amorphe Kohlenstoffmatrix (C) eingebettet sind.
Unter nicht-aggregierten Siliciumpartikeln ist im Rahmen der Erfindung zu verstehen, dass sie in Form isolierter Einzelpartikel, die aber gegebenenfalls lockere Partikelverbunde ("Agglomerate") bilden können, vorliegen. Unter Aggregaten sind dagegen feste, z.B. über Sinterhälse miteinander verwachsene Primärpartikel zu verstehen, die sich nicht mehr voneinander trennen lassen.

Durch die Verwendung nicht-aggregierter, nanoskaliger Si-Partikel wird die absolute Volumenexpansion des Siliciums bei der Beladung reduziert (bzw. gleichmäßig auf das Aktivmaterial verteilt), um eine mechanische Zerstörung des Aktivmaterials sowie der Elektrodenstruktur unter Verlusten der Kapazität über mehrere Lade- und Entladezyklen zu verhindern.

Aggregierte Si-Nanopartikel, welche zwischen den einzelnen Partikeln kovalente Bindungen aufweisen, haben eine schlechtere mechanische Stabilität als einzelne nicht-aggregierte Partikel, weil diese Bindungen bevorzugte Bruchstellen sind.

Im Versagensfall können diese Bruchstellen zu einem Verlust an elektrischer Kontaktierung führen.

Isolierte bzw. vereinzelte, nicht-aggregierte Partikel, die gleichmäßig in einer C-Matrix eingebettet sind, weisen von vornherein keine bevorzugten Bruchstellen auf und bleiben daher an der Oberfläche vollständig elektrisch kontaktiert, was die Nutzung der elektrochemischen Kapazität des Siliciums verbessert.

Der die Silicium-Partikel umgebende Kohlenstoff schützt die Oberfläche vor Reaktionen mit anderen Bestandteilen der Elektrode bzw. der Batteriezelle und reduziert so die durch diese Reaktionen verursachten Lithium-Verluste.

Daraus ergibt sich ein Si/G/C-Kompositmaterial, das sich im Vergleich zu einem Komposit enthaltend aggregierte Silicium-Partikel oder zu einer physikalischen Mischung mit ähnlicher Zusammensetzung durch ein deutlich verbessertes elektrochemisches Verhalten auszeichnet.

Ein weiterer Vorteil dieser Kompositmaterialien ist, dass sich diese bei der Herstellung von Elektroden von Lithium-Ionen-Batterien deutlich einfacher verarbeiten lassen als reine nanoskalige Silicium-Partikel.

Die Erfindung sieht vorzugsweise eine Kompositstruktur vor, in der ein oder mehrere Graphitkerne enthalten sind, die mit einer amorphen Kohlenstoffschicht versehen sind, welche eingebettete, nanoskalige Silicium-Partikel enthält, die nicht-aggregiert vorliegen.

Durch die Erfindung lassen sich die bekannten Vorteile der Graphit-Komponente (hohe Leitfähigkeit und Strukturstabilität) und nicht-aggregierter, nanoskaliger Silicium-Partikel (große Kapazität) kombinieren.

Überraschenderweise wurde gefunden, dass sich Si/G/C-Komposite enthaltend nicht-aggregierte Silicium-Partikel durch eine vergleichsweise hohe Kapazitätsnutzung in der Größenordnung > 90% auszeichnen.

Der Einsatz von nanoskaligen Si-Partikeln verbessert weiterhin die mechanische Stabilität des Aktivmaterials beim Laden und Entladen.

Durch die Nichtaggregation liegen die Si-Partikel gleichmäßiger dispergiert in der C-Matrix vor und sind durchgängig elektrochemisch kontaktiert; weiterhin existieren keine schwachen Verbindungen zwischen aggregierten Partikeln, die als bevorzugte Bruchstellen fungieren können und somit zu einem Verlust an elektrischer Kontaktierung führen könnten.

Die Aktivmaterialien lassen sich mit hoher Reproduzierbarkeit und homogener Verteilung der Komponenten herstellen und verarbeiten.

Damit resultiert insgesamt ein neues Si/G/C-Kompositmaterial mit verbesserter elektrochemischer Zyklenstabilität und Kapazitätsnutzung.

Das Si/G/C-Kompositmaterial wird hergestellt, indem in einem ersten Schritt nicht-aggregierte nanoskalige Siliciumpartikel (Si) zusammen mit Graphit (G) in einen organischen Kohlenstoffprecursor (P) eingebettet wird, und dieses Si/G/P-Präkomposit dann in einem zweiten Schritt thermisch so behandelt wird, dass der Precursor (P) in amorphen Kohlenstoff (C) überführt wird.

Das zur Herstellung des Si/G/C-Komposits gemäß der vorliegenden Erfindung eingesetzte Silicium-haltige Aktivmaterial (Si) kann elementares Silicium, ein Siliciumoxid oder eine Silicium/Metall-Legierung sein. Bevorzugt wird elementares Silicium eingesetzt, da dieses die größte Speicherkapazität für Lithium-Ionen aufweist.

Das Si-haltige Aktivmaterial wird in Form von nicht-aggregierten nanoskaligen Siliciumpartikeln eingesetzt. Runde oder splitterförmige Partikel sind dabei besonders bevorzugt. Die Si-Partikel können isoliert oder agglomeriert, aber nicht aggregiert in der Komposit-Struktur vorliegen. Besonders bevorzugt liegen die Si-Partikel in isolierter Form vor.

Besonders bevorzugt für die Anwendung in Li-Ionen-Batterien ist ein Si-haltiges Aktivmaterial, das in der Kornform I-IV nach DIN ISO 3435, die Schüttgüter in Abhängigkeit der Beschaffenheit der Kornkanten in 6 unterschiedliche Kornformen untergliedert, vorliegt.

Besonders bevorzugt sind nanoskalige Si-Partikel mit einer durchschnittlichen Partikelgröße < 400 nm, besonders bevorzugt < 200 nm, die kristallin oder amorph vorliegen können, wobei kristalline Partikel im Rahmen dieser Erfindung besonders bevorzugt sind.

Das Si-haltige Aktivmaterial im Si/G/C-Komposit kann auch linear mit Faserstruktur oder in Form von Si-haltigen Filmen oder Beschichtungen vorliegen.

Das Silicium-haltige Aktivmaterial kann aus hochreinem Polysilicium, aber auch aus metallurgischem Silicium, welches elementare Verunreinigungen wie z. B. O, C, N, Fe, Al, Ca aufweisen kann, bestehen.

Das Silicium-haltige Aktivmaterial kann auch mit einer dünnen, auf natürlichem Wege durch Oberflächenoxidation mittels Luftkontakt entstandenen Oxidschicht (natives Oxid; ≤10 nm) versehen sein oder gezielt durch chemische Oxidation (z. B. durch Reaktion mit H₂O₂) passiviert sein, wobei diese Oxidschichten bevorzugt dünn ausfallen.

Zur Verbesserung der elektronischen Leitfähigkeit kann das Silicium-haltige Aktivmaterial gezielt mit Stoffen wie Bor, Phosphor oder Arsen dotiert sein.

Weiterhin kann es mit anderen Metallen und Elementen legiert in Form von Siliciden vorliegen, z. B. mit Metallen wie Li, Sn, Ca, Co, Ni, Cu, Cr, Ti, Al, Fe u.a. Diese Legierungen können binär, ternär oder multinär vorliegen. Zur Erhöhung der elektrochemischen Speicherkapazität ist ein besonders niedriger Gehalt an Fremdelementen bevorzugt.

Das eingesetzte Silicium-haltige Aktivmaterial kann prozessbedingt zufällig oder auch gezielt an der Oberfläche chemisch modifiziert sein. Typische Oberflächenfunktionalitäten können sein: Si-H, Si-Cl, Si-OH, Si-OAlkyl, Si-OAryl, Si-Alkyl, Si-Aryl, Si-OSilyl. Besonders bevorzugt sind Oberflächengruppen, die physikalisch oder chemisch an den jeweils verwendeten Kohlenstoffprecursor (P) anbinden können (insbesondere z. B. Si-OH, Si-(CH₂)ₙNR₂, Si-(CH₂)ₙOCH₂CH(O)CH₂, Si-(CH₂)ₙOH, Si-C₆H₄OH, Si-(CH₂)ₙCN, Si-(CH₂)ₙNCO etc. mit n = 1-10). Die angebundenen Oberflächengruppen können funktionelle Gruppen enthalten und wahlweise monomer oder polymer sein. Sie können nur an einer oder mehreren Molekülketten an der Si-Oberfläche angebunden sein.

Neben dem Si-haltigen Aktivmaterial ist zusätzlich Graphit (G) als weiteres Aktivmaterial im erfindungsgemäßen Si/G/C-Kompositmaterial enthalten.

Dieser Graphit kann ein natürlicher oder ein synthetisch hergestellter Graphit sein, wobei der synthetisch hergestellte Graphit bevorzugt ist. Der Graphit kann vollständig kristallin oder auch teilkristallin mit amorphen Bestandteilen bis zu 90% sein, wobei ein kristalliner Anteil > 50% bevorzugt ist. Der Graphit kann als dünne Flakes oder runde Partikel vorliegen. Auch Graphen kann als nanoskalige Graphit-Komponente im Komposit enthalten sein.

Neben dem Si-haltigen Aktivmaterial und Graphit können weitere Aktivmaterialien in Form von Partikeln oder Beschichtungen in den erfindungsgemäßen Si/G/C-Kompositmaterialien enthalten sein. Diese können aus einer Kohlenstoffmodifikation bestehen wie beispielsweise (Leit-)Ruß, amorpher Kohlenstoff, pyrolytischer Kohlenstoff, Soft-Carbon, Hard-Carbon, Carbon Nanotubes (CNTs), Fullerene, oder aus einem anderen Aktivmaterial, wie beispielsweise Li, Sn, Mg, Ag, Co, Ni, Zn, Cu, Ti, B, Sb, Al, Pb, Ge, Bi, seltene Erden oder Kombinationen davon. Bevorzugte weitere Aktivmaterialien sind Leitruß und Carbon Nanotubes sowie Li und Sn, die auch als Legierung mit Si vorliegen können. Zusätzlich können weitere Komponenten, basierend auf einem inaktiven Material auf der Basis von Metallen (z. B. Kupfer), Oxiden, Carbiden oder Nitriden im Komposit enthalten sein, die bekanntermaßen strukturelle Funktionen in der Kompositstruktur erfüllen und somit die elektrochemische Stabilität positiv beeinflussen können.

Als Kohlenstoff-Precursoren (P) können verschiedene Verbindungen und Stoffgruppen, entweder in Mischung oder separat nacheinander in das Komposit eingebracht werden. Besonders vorteilhaft sind Precursoren, die einen hohen C-Gehalt aufweisen und bei der thermischen Überführung in Kohlenstoff leitfähige Strukturen in hoher Ausbeute erzeugen.

Bevorzugte Precursoren sind: Elementarer Kohlenstoff (v.a. Ruße, Graphite, Kohlen, Kokse, Carbonfasern, Fullerene, Graphen u.a.), einfache Kohlenwasserstoffe (z. B. Methan, Ethan, Ethylen, Acetylen, Propan, Propylen, Butan, Buten, Pentan, Isobutan, Hexan, Benzol, Toluol, Styrol, Ethylbenzol, Diphenylmethan, Naphthalin, Phenol, Cresol, Nitrobenzol, Chlorbenzol, Pyridin, Anthracen, Phenanthren u.a.), polyaromatische Kohlenwasserstoffe und -mischungen (v.a. Peche und Teere: Mesogenes Pech, Mesophasen-Pech, Petrolpech, Steinkohlenteerpech u.a.), organische Säuren (v.a. Citronensäure), Alkohole (v.a. Ethanol, Propanol, Furfurylalkohol u.a.), Kohlenhydrate (v.a. Glucose, Saccharose, Lactose, Cellulose, Stärke, u.a. Mono-, Oligo- und Polysaccharide), organische Polymere (v.a. Epoxyharze, Phenol-Formaldehyd-Harz, Resorcin-Formaldehyd-Harz, Lignin, Tannin, Polyethylen, Polystyrol, Polyvinylchlorid, Polyvinylidenchlorid, Polyvinylidenfluorid, Polytetrafluorethylen, Polyvinylacetat, Polyvinylalkohol, Polyethylenoxid, Polyacrylnitril, Polyanilin, Polybenzimidazol, Polydopamin, Polypyrrol, Poly-paraphenylen), Silicone.

Besonders bevorzugte Precursoren sind organische Polymere und Peche. Ganz besonders bevorzugte Precursoren sind organische Polymere, insbesondere Resorcin-Formaldehyd-Harz, Lignin und Polyacrylnitril.

Die Kohlenstoff-Precursoren können in Mischung, in molekularer Verknüpfung (z. B. Co-Polymere) oder auch phasensepariert nebeneinander in der Kompositstruktur vorliegen.

### Herstellung eines Si/G/P-Präkomposits

Die Herstellung des Si/G/P-Materials erfolgt durch Beschichtung der nicht-aggregierten nanoskaligen Siliciumpartikel (Si) und des Graphits (G) mit Kohlenstoff-Precursoren (P) oder durch Einbettung der nicht-aggregierten nanoskaligen Siliciumpartikel (Si) und des Graphits in eine Precursor-haltige Matrix.

Dabei können das Silicium-haltige Aktivmaterial und Graphit zusammen oder nacheinander in die jeweiligen Prozesse eingebracht werden. Das Silicium-haltige Aktivmaterial und der Graphit können zusammen mit dem Kohlenstoff-Precursor hochenergetisch vermahlen werden (trocken oder mit Wasser bzw. organischem Lösungsmittel) oder sonst in irgendeiner Form physikalisch vermischt werden.

Weiterhin kann das Silicium-haltige Aktivmaterial und Graphit in eine Dispersion, Lösung oder Schmelze des Kohlenstoff-Precursors dispergiert und durch anschließende Entfernung des Lösungsmittels mit dem Precursor beschichtet bzw. in den Precursor eingebettet werden. Das Entfernen des Lösungsmittels kann z.B. unter vermindertem Druck, durch Sprüh(trocknungs)verfahren oder durch Fällung des Si/G/Precursor-Präkomposits und anschließender Filtration sowie Zentrifugation bewerkstelligt werden.

Die Verfahren in flüssiger Phase sind bevorzugt, da hier die beste Verteilung von Silicium und Graphit in dem C-Precursor erreicht werden kann.

In einer besonders bevorzugten Ausführungsform werden das Si-haltige Aktivmaterial und Graphit zusammen in eine Lösung eines oder mehrerer Precursor-Monomere dispergiert, und die Monomere in Lösung so zu dem Precursor (P) polymerisiert, dass das Si-haltige Aktivmaterial und Graphit vollständig in die Precursor-Matrix eingebettet werden. Die so erhaltenen Si/G/P-Präkomposite können feucht oder getrocknet weiter umgesetzt werden. Auch können die Zwischenstufen vor der weiteren Verarbeitung nachträglich zerkleinert werden oder der Beschichtung/Einbettung mit weiteren C-Precursoren unterworfen werden.

Eine andere Möglichkeit besteht darin, Silicium-Nanopartikel aus der Gasphase über CVD- bzw. TVD-Prozesse auf Graphit oder aber C-Precursoren aus der Gasphase auf dem Si-haltigen Aktivmaterial und Graphit abzuscheiden.

### Überführung des Si/G/P-Präkomposits in ein Si/G/C-Komposit

Die Überführung der Kohlenstoff-Precursoren (P) in anorganischen, amorphen Kohlenstoff (C) zur Herstellung der erfindungsgemäßen Si/G/C-Komposite wird bevorzugt thermisch durch anaerobe Carbonisierung bewerkstelligt.

Dieser Prozess kann beispielsweise in einem Rohrofen, Drehrohrofen, Kammerofen, Muffelofen oder einem Wirbelschichtreaktor stattfinden.

Die Wahl des Reaktortyps richtet sich bevorzugt danach, ob man die Carbonisierung statisch oder unter ständiger Durchmischung des Reaktionsmediums durchführen möchte.

Die Carbonisierung wird bei Temperaturen zwischen 400 und 1400° C durchgeführt, bevorzugt bei 500-1000° C und besonders bevorzugt bei 700-1000° C.

Die verwendete Atmosphäre besteht aus einem Inertgas wie Stickstoff oder Argon, vorzugsweise aus Argon, dem wahlweise auch weitere Anteile eines reduzierenden Gases wie Wasserstoff zugesetzt sein können.

Die Atmosphäre kann sich statisch über dem Reaktionsmedium befinden oder bevorzugt in Form eines Gasflusses über die Reaktionsmischung strömen.

Die dazu verwendeten Flussraten hängen vom Volumen des Reaktors ab. Bei einem Reaktorvolumen von ca. 10 l beträgt die Flussrate bevorzugt zwischen 0 und 1 I pro Minute, besonders bevorzugt 100-600 ml/min und ganz besonders bevorzugt 150-300 ml/min.

Das Aufheizen der Reaktionsmischung kann mit unterschiedlichen Heizraten zwischen 1 und 20° C pro Minute durchgeführt werden, wobei bevorzugt Heizraten zwischen 1-10° C/min und besonders bevorzugt 3-5° C/min verwendet werden.

Weiterhin ist auch ein stufenweiser Carbonisierungsprozess mit verschiedenen Zwischentemperaturen und -heizraten möglich.

Nach Erreichen der Zieltemperatur wird die Reaktionsmischung eine gewisse Zeit bei der Temperatur getempert oder sogleich abgekühlt. Zur Vervollständigung der Kohlenstoff-Bildung sind Haltedauern von 30 min bis 24 h bevorzugt, besonders bevorzugt 2-10 h und ganz besonders bevorzugt 2-3 h.

Auch kann das Abkühlen aktiv oder passiv sowie gleichmäßig oder stufenweise durchgeführt werden.

Weil für die weitere Verwendung der so erhaltenen Si/G/C-Komposit-Pulver zur Elektrodenpräparation meist eine spezifizierte Partikelgröße notwendig ist, können sich nach der Carbonisierung weitere Schritte zur mechanischen Klassifizierung und gegebenenfalls zur Zerkleinerung anschließen.

Die Oberfläche der erhaltenen Si/G/C-Komposit-Pulver kann anschließend in weiteren Prozessschritten, beispielsweise durch das Aufbringen weiterer C-Beschichtungen modifiziert werden.

Die erhaltenen Si/G/C-Komposit-Pulver können in Form isolierter Partikel, lockerer Agglomerate oder fester Aggregate anfallen, wobei einzelne Partikel für die Anwendung in Li-Ionen-Batterien besonders bevorzugt sind.

Die Si/G/C-Partikel können rund, splitterförmig oder in Form von Flakes vorliegen.

Die durchschnittliche Primärpartikelgröße der Komposite ist bevorzugt <1 mm, besonders bevorzugt <100 µm und ganz besonders bevorzugt <50 µm.

Das Silicium-haltige Aktivmaterial liegt in den Si/G/C-Kompositen bevorzugt in Form isolierter Partikel oder agglomeriert, aber keinesfalls aggregiert vor.

Weiterhin können die Silicium-haltigen Partikel gleichmäßig in der C-Matrix eingebettet vorliegen (ohne direkten Graphit-Kontakt) oder auch die Graphit-Partikel berühren.

Der aus den C-Precursoren erzeugte amorphe Kohlenstoff kann das Silicium-haltige Aktivmaterial und den Graphit in Form einer dünnen Schicht bedecken oder vorzugsweise eine C-Matrix um den Graphit-Kern ausbilden, in welche das Silicium-haltige Aktivmaterial innen eingebettet ist oder außen an der Oberfläche vorliegt, sowie Kombinationen aus diesen Konfigurationsmöglichkeiten. Dabei kann die C-Matrix sehr dicht oder bevorzugt porös sein. Besonders bevorzugt ist eine Struktur, in welche das Silicium vollständig in eine poröse C-Matrix eingebettet auf dem Graphit-Kern vorliegt.

Sowohl das Silicium-haltige Aktivmaterial als auch der Kohlenstoff im Si/G/C-Komposit können kristallin oder amorph vorliegen sowie Mischungen aus kristallinen und amorphen Bestandteilen enthalten.

Die Si/G/C-Komposite können niedrige oder auch sehr hohe spezifische Oberflächen (BET) aufweisen, die sich im Bereich von 10-400 m²/g bewegen können (100-250 m²/g bevorzugt).

Die erfindungsmäßen Si/G/C-Komposite können in verschiedenen chemischen Zusammensetzungen vorliegen.

Allgemein können die Si/G/C-Komposite Siliciumgehalte von 10-90 Gew.-%, Gesamtkohlenstoffgehalt (G + C) von 10-90 Gew.-% und Sauerstoffgehalte von 0-20 Gew.-% aufweisen. Bevorzugt sind Zusammensetzungen aus 20-50 Gew.-% Silicium, 50-80 Gew.-% Gesamtkohlenstoffgehalt (G + C) und 0-10 Gew.-% Sauerstoffgehalt. Besonders bevorzugt sind Zusammensetzungen aus 10-30 Gew.-% Silicium, 70-90 Gew.-% Gesamtkohlenstoffgehalt (G + C) und 0-5 Gew.-% Sauerstoffgehalt.

Die Kohlenstoffanteile können sich, je nach Komposit-Zusammensetzung, auf reinen, durch Carbonisierung erhaltenen amorphen Kohlenstoff, Graphit, ggf. Leitruß, ggf. Carbon Nanotubes (CNTs) oder andere Kohlenstoffmodifikationen verteilen. Besonders bevorzugt ist ein hoher Anteil an Graphit.

Neben den genannten Hauptbestandteilen können auch weitere chemische Elemente in Form eines gezielten Zusatzes oder zufälliger Verunreinigung enthalten sein: Li, Fe, Al, Cu, Ca, K, Na, S, Cl, Zr, Ti, Pt, Ni, Cr, Sn, Mg, Ag, Co, Zn, B, Sb, Pb, Ge, Bi, Seltene Erden, deren Gehalte bevorzugt < 1 Gew.-% und besonders bevorzugt < 100 ppm sind.

Ein weiterer Gegenstand der vorliegenden Erfindung ist die Verwendung der erfindungsgemäßen Si/G/C-Komposite als aktives Elektrodenmaterial für Lithium-Ionen-Batterien bzw. ein Elektrodenmaterial für eine Lithium-Ionen-Batterie, das erfindungsgemäße Si/G/C-Komposite umfasst.

Ein solches Elektrodenmaterial wird vorzugsweise zur Herstellung der negativen Elektrode (Anode) einer Lithium-Ionen-Batterie verwendet.

Daher ist ein weiterer Gegenstand der vorliegenden Erfindung eine Lithium-Ionen-Batterie mit einer ersten Elektrode als Kathode, mit einer zweiten Elektrode als Anode, mit einem zwischen beiden Elektroden angeordneten Separator, mit zwei Anschlüssen an den Elektroden, mit einem die genannten Teile aufnehmenden Gehäuse und mit einem Lithium-Ionen enthaltenden Elektrolyten, mit dem beide Elektroden und der Separator getränkt sind, wobei die Anode ein Elektrodenmaterial enthält, welches die erfindungsgemäßen Si/G/C-Komposite enthält.

Zu Herstellung der Anode werden die aktiven Elektrodenmaterialien mit weiteren Komponenten und ggf. einem Lösungsmittel, wie Wasser, Hexan, Toluol, Tetrahydrofuran, N-Methyl-pyrrolidon, N-Ethyl-pyrrolidon, Aceton, Ethylacetat, Dimethylsulfoxid, Dimethylacetamid oder Ethanol, oder Lösungsmittelgemischen zu einer Elektrodentinte bzw. -paste verarbeitet.

Die Materialverarbeitung kann beispielsweise mit Rotor-Stator-Maschinen, Hochenergiemühlen, Planetenkneter, Rührwerkskugelmühlen, Rüttelplatten oder Ultraschallgeräten erfolgen.

Unter weiteren Komponenten sind weitere Materialien, welche Lithium-Ionen speichern können, wie z. B. Graphit, Lithium, Zinn, Aluminium, Siliciumoxid, oder Metall-Legierungen, polymere Bindemittel oder -gemische, leitfähige Materialien, wie Leitruß, Kohlenstoffnanoröhren (CNT) oder Metallpulver, und weitere Hilfsstoffe, wie Dispergiermittel oder Porenbildner, zu verstehen.

Mögliche Bindemittel sind Polyvinylidenfluorid, Polytetrafluorethylen, Polyolefine, oder thermoplastische Elastomere, insbesondere Ethylen/Propylen-Dien-Terpolymere.

In einer besonders bevorzugten Ausführungsform handelt es sich um modifizierte Zellulose als Bindemittel, welche mit Wasser als Lösungsmittel zu einer Elektrodentinte oder -paste verarbeitet wird.

Der Feststoffgehalt in der Tinte bzw. Paste liegt vorzugweise zwischen 5 Gew.-% und 95 Gew.-%, besonders bevorzugt zwischen 10 Gew.-% und 50 Gew.-%.

Die Elektrodentinte oder -paste mit den erfindungsgemäßen Kompositmaterialien wird vorzugweise auf eine Kupferfolie oder einen anderen Stromsammler aufgerakelt, mit einer Trockenschichtdicke von 2 µm bis 500 µm, besonders bevorzugt von 10 µm bis 300 µm.

Andere Beschichtungsverfahren, wie Rotationsbeschichtung (Spin-Coating), Tauchbeschichtung, Streichen, oder Sprühen, können ebenso verwendet werden.

Vor dem Beschichten der Kupferfolie mit dem erfindungsgemäßen Elektrodenmaterial kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Die Elektrodenbeschichtung wird bis zur Gewichtskonstanz getrocknet. Die Trocknungstemperatur richtet sich nach den eingesetzten Materialien und dem verwendeten Lösungsmittel. Sie liegt zwischen 20° C und 300° C, besonders bevorzugt zwischen 50° C und 150° C.

Der Anteil des erfindungsgemäßen Kompositmaterials bezogen auf das Trockengewicht der Elektrodenbeschichtung beträgt zwischen 5 Gew.-% und 98 Gew.-%, besonders bevorzugt zwischen 60 Gew.-% und 95 Gew.-%. Weitere Komponeten der Elektrodenbeschichtung sind Bindemittel, Leitadditive und gegebenenfalls Dispergierhilfen.

Als Kathodenmaterial sind Lithiumcobaltoxid, Lithiumnickeloxid, Lithiumnickelcobaltoxid (dotiert und nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat, oder Lithiumvanadiumoxide bevorzugt.

Der Separator ist eine nur für Ionen durchlässige Membran, wie sie in der Batterieherstellung bekannt ist. Der Separator trennt die erste Elektrode von der zweiten Elektrode.

Der Elektrolyt ist eine Lösung eines oder mehrerer Lithiumsalze (= Leitsalz) in einem aprotonischen Lösungsmittel. Einsetzbare Leitsalze sind zum Beispiel Lithiumhexafluorophosphat, Lithiumhexafluoroarsenat, Lithiumperchlorat, Lithiumtetrafluoroborat, UCF₃SO₃, LiN(CF₃SO₂) oder Lithiumborate (insbesondere Lithiumbis(oxalato)borat (LiBOB) oder Lithiumdifluoro(oxalato)borat (LiDFOB)).

Die Konzentration des Leitsalzes beträgt vorzugsweise von 0,5 mol/l bis zur Löslichkeitsgrenze des entsprechenden Salzes, bevorzugt jedoch 1 mol/l.

Als Lösungsmittel können cyclische Carbonate, Propylencarbonat, Ethylencarbonat, Dimethylcarbonat, Diethylcarbonat, Ethylmethylcarbonat, Dimethoxyethan, Diethoxyethan, Tetrahydrofuran, 2-Methyltetrahydrofuran, gamma-Butyrolacton, Dioxolan, Acetonitril, org. Kohlensäureester oder Nitrile, einzeln oder als Mischungen daraus, eingesetzt werden.

Besonders bevorzugt enthält der Elektrolyt einen Filmbildner, wie Vinylencarbonat, Fluorethylencarbonat, etc., wodurch eine signifikante Verbesserung der Zyklenfestigkeit der Si-Kompositelektrode erreicht werden kann. Dies wird hauptsächlich der Bildung einer festen Elektrolytzwischenphase auf der Oberfläche von aktiven Partikeln zugeschrieben. Der Anteil des Filmbildners im Elektrolyten beträgt bevorzugt zwischen 0,1 Gew.-% und 20,0 Gew.-%, besonders bevorzugt zwischen 0,2 Gew.-% und 15,0 Gew.-%, ganz besonders bevorzugt zwischen 0,5 Gew.-% und 10 Gew.-%.

Neben den oben beschriebenen flüssigen Elektrolyt-Systemen können weiterhin auch Fest- oder Gelelektrolyte verwendet werden, die eine feste Phase von z. B. Polyvinylidenfluorid, Hexafluorpropylen, Polyvinylidenfluorid-Hexafluorpropylen-Copolymer, Polyacrylnitril, Polymethylmethacrylat oder Polyethylenoxid beinhalten, sowie Mischungen dieser Festelektrolyte bzw. dieser festen Phasen mit den oben genannten flüssigen Elektrolyt-Phasen.

Die erfindungsgemäße Lithiumionenbatterie kann in allen üblichen Formen in gewickelter, gefalteter oder gestapelter Form hergestellt werden.

Alle zur Herstellung der erfindungsgemäßen Lithiumionenbatterie, wie oben beschrieben, benutzten Stoffe und Materialien sind bekannt. Die Herstellung der Teile der erfindungsgemäßen Batterie und ihre Zusammenfügung zur erfindungsgemäßen Batterie erfolgt nach den auf dem Gebiet der Batterieherstellung bekannten Verfahren.

### Beispiele und Vergleichsbeispiele

Die folgenden Beispiele verdeutlichen die Methoden und das Vorgehen bei der Anwendung dieser Erfindung, sind aber nicht limitierend für dessen Umfang.

Sofern nicht anders angegeben, wurden die nachstehenden Beispiele in einer Atmosphäre aus trockenem Argon mit einer Reinheit von 99,999 Vol.%, und bei einem Druck der umgebenden Atmosphäre von etwa 1013 mbar sowie bei Raumtemperatur (23° C) durchgeführt.
Die für die Synthesen verwendeten Lösungsmittel wurden nach Standardverfahren getrocknet und unter einer trockenen Argon-Atmosphäre aufbewahrt. Die folgenden Methoden und Materialien wurden in den Beispielen verwendet:

### Carbonisierung

Alle in den Beispielen durchgeführten Carbonisierungen wurden mit einem
1200° C Drei-Zonen Rohrofen (TFZ 12/65/550/E301) der Fa. Carbolite GmbH unter Verwendung einer Kaskadenregelung inklusive eines Probenthermoelements Typ N durchgeführt. Die angegebenen Temperaturen beziehen sich auf die Innentemperatur des Rohrofens am Ort des Thermoelements. Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas (Durchmesser 6 cm; Länge 83 cm) eingebracht. Die für die Carbonisierungen verwendeten Einstellungen und Prozessparameter sind in den jeweiligen Beispielen angegeben.

### Mechanische Nachbehandlung/Mahlung

Die nach der Carbonisierung erhaltenen Si/G/C-Pulver wurden z. T. durch Mahlung mit einer Planetenkugelmühle Retsch PM100 nachträglich weiter zerkleinert. Dazu wurde das Si/G/C-Pulver in einen 50 ml-Mahlbecher (Spezialstahl) zusammen mit Mahlkugeln (Spezialstahl; 10 mm Durchmesser) eingebracht und bei voreingestellter Drehzahl (300 rpm) eine in den nachfolgenden Beispielen definierte Zeitdauer vermahlen.

Folgende analytische Methoden und Geräte wurden zur Charakterisierung der erhaltenen Si/G/C-Komposite eingesetzt:

### Rasterelektronemikroskopie/energiedisperse Röntgenspektrometrie (REM/EDX)

Die mikroskopischen Untersuchungen wurden mit einem Rasterelektronemikroskop Zeiss Ultra 55 und einem energiedispersivem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft.

### Transmissionselektronenmikroskopie/energiedisperse Röntgenspektrometrie (TEM/EDX)

Die mikroskopischen Untersuchungen wurden mit einem Transmissionsmikroskop Zeiss Libra 120 und einem EDX-Detektor von Oxford Instruments durchgeführt. Die Proben wurden vor der Untersuchung in Spezifix 20 eingebettet und mittels Ultramikrotomschnitt untersucht.

### Anorganische Analytik / Elementaranalyse

Die in den Beispielen angegebenen Kohlenstoff-Gehalte wurden mit einem Leco CS 230 Analysator ermittelt, zur Bestimmung von Sauerstoff-Gehalten wurde ein Leco TCH-600 Analysator eingesetzt.

Die angegebenem Silicium-Gehalte in den Si/G/C-Kompositen wurden mittels ICP (inductively coupled plasma)-Emissionspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

### Partikelgrößenbestimmung

Die Bestimmung der Partikelgrößenverteilung erfolgte im Rahmen dieser Erfindung nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten Si/G/C-Komposite wurden die Partikel in Wasser dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt.

### Spezifische Oberfläche nach BET

Die Bestimmung der spezifischen Oberfläche der erhaltenen Si/G/C-Komposite wurde mit dem Gerät Sorptomatic 1990 nach der BET-Methode durchgeführt.

### Thermogravimetrie (TGA)

Das Verhältnis verschiedener Kohlenstoff-Modifikationen in einem Komposit (Graphit (G) neben amorphem Kohlenstoff (C)) wurde mittels Thermogravimetrie mit einer Mettler Thermowaage TGA 851 ermittelt. Die Messung wurde unter Sauerstoff als Messgas im Temperaturbereich von 25-1000° C und einer Heizrate von 10° C/min durchgeführt. Bei Anwesenheit von G und C findet der durch Verbrennung des Gesamtkohlenstoffs verursachte Massenverlust im Temperaturbereich von 400-800° C in zwei Stufen statt, aus deren Verhältnis das in den betreffenden Beispielen angegebene C:G-Verhältnis ermittelt wurde.

Folgende Materialien wurden aus kommerziellen Quellen bezogen bzw. selber hergestellt und ohne weitere Reinigung direkt eingesetzt: eine Suspension aus Silicium-Nanopulver (NP180 - splitterförmige, nicht-aggregierte Si-Partikel selbst hergestellt durch Nassmahlung in einer Rührwerkskugelmühle, D50 = 180 nm) in Ethanol (Feststoffgehalt 22 Gew.%), Silicium-Nanopulver (aggregierte runde Primärpartikel mit 20-30 nm Durchmesser hergestellt durch Nanostructured & Amorphous Materials; D50 = 256 nm), Graphit KS6L-C (Timcal), Methanol (99,0% SeccoSolv; Merck), Resorcin (>99,0%; Sigma-Aldrich), Formaldehyd-Lösung (37% in Wasser, mit 10%-15% Methanol stabilisiert; Sigma-Aldrich), Ammoniak-Lösung (32%; Merck)

### Beispiel 1

### Si/G/C-Komposit mit nicht-aggregierten, nanoskaligen Silicium-Partikeln

Silicium-Nanopulver-Suspension (9,00 g; 22 Gew.-% NP180 in Ethanol; entspricht 2,07 g Si) und Graphit (3,00 g; KS6L-C; Timcal) wurden zusammen mit 80 ml Methanol vermischt. Die resultierende Suspension wurde 2×10 min mit internem Ultraschall behandelt (Branson Digital Sonifier 250). Resorcin (3,20 g) und Formaldehyd-Lösung (5,90 g; 37% in Wasser, mit 10% Methanol stabilisiert) wurden hinzugegeben. Der pH-Wert der Suspension wurde mit 32%iger Ammoniak-Lösung auf pH = 6,5 eingestellt (∼0,5 ml Ammoniak-Lösung).

Die Reaktionsmischung wurde unter Rühren erhitzt (90° C, 4 h) und anschließend auf Raumtemperatur abgekühlt.

Das Lösungsmittelgemisch wurde unter reduziertem Druck entfernt (3·10⁻² mbar, 80° C). Der erhaltene Rückstand wurde unter diesen Bedingungen 2 h im Vakuum getrocknet.

Der schwarz-braune Feststoff wurde in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon als Intertgas carbonisiert: Zuerst Heizrate 3° C/min, Temperatur 300° C, Haltedauer 1 h, Ar-Flussrate 200 ml/min; danach direkt weiter mit Heizrate 10° C/min, Temperatur 700° C, Haltedauer 2 h, Ar-Flussrate 200 ml/min.

Nach dem Abkühlen wurden 5,25 g eines schwarzen, pulverigen Feststoffs erhalten (Carbonisierungsausbeute 83%).

Elementare Zusammensetzung: Si 26,4 Gew.-%, Kohlenstoff 69,0 Gew.-% (G 40 Gew.-%; C 29 Gew.-%), O 4,6 Gew.-%.

Partikelgrößenverteilung (Statische Laserlichtstreuung; Horiba LA-950): D10: 2,76 µm, D50: 4,79 µm, D90: 8,35 µm. Die Werte D10, D50 und D90 stehen hier und an anderer Stelle für die 10%-, 50%- und 90%-Perzentilwerte der volumengewichteten Durchmessergrößenverteilungen des Mahlguts.

Das Si/G/C-Pulver wurde zur Entfernung von Überkorn >20 µm nachträglich in einer Planetenkugelmühle (Retsch PM1000) weiter zerkleinert: Mahlbecher und -kugeln aus Spezialstahl; 12x10 mm Kugeln; Drehzahl 300 U/min; 2 h.

Partikelgrößenverteilung (Statische Laserlichtstreuung; Horiba LA-950): D10: 0,334 µm, D50: 1,15 µm, D90: 5,33 µm.

Spezifische Oberfläche (BET): 236 m²/g.

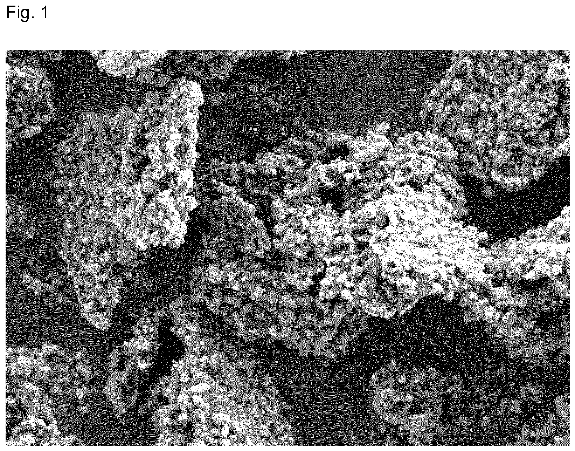

Materialkapazität (berechnet aus der elementaren Zusammensetzung und den Kapazitäten der enthaltenen Elemente): 1119 mAh/g
**Fig. 1** zeigt das REM-Bild des Si/G/C-Komposits gemäß **Beispiel 1** (7.500-fache Vergrößerung). Der Graphit-Kern ist mit nicht-aggregierten Si-Nanopartikeln bedeckt, die ihrerseits mit amorphem Kohlenstoff beschichtet sind.

### Beispiel 2

### Herstellen einer Elektrodenbeschichtung

2,00 g des Kompositmaterials mit nicht aggregierten Silicium-Partikeln nach **Beispiel 1** und 0,30 g Leitruß (Timcal, Super P Li) wurden in 20,0 g einer 1,0 Gew.-%igen Lösung von Natrium-Carboxymethylcellulose (Daicel, Grade 1380) in Wasser mittels Dissolver bei einer Umlaufgeschwindigkeit von 12 m/s dispergiert.

Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht.

Die so hergestellte Elektrodenbeschichtung wurde anschließend 60 min bei 80° C getrocknet.

Die mittlere Kapazität der Elektrodenbeschichtung beträgt 895 mAh/g, das mittlere Flächengewicht 0,57 mg/cm².

### Beispiel 3

### Durchführen der elektrochemischen Untersuchungen

Die elektrochemischen Untersuchungen wurden an einer Halbzelle in Drei-Elektroden-Anordnung (stromlose Potentialmessung) durchgeführt.

Die Elektrodenbeschichtung aus **Beispiel 2** wurde als Arbeitselektrode eingesetzt, Lithium-Folie (Rockwood Lithium, Dicke 0,5mm) als Referenz- und Gegenelektrode verwendet. Ein mit 100 µl Elektrolyt getränkter, 6-lagiger Vliesstoffstapel (Freudenberg Vliesstoffe, FS2226E) diente als Separator.

Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.-% Vinylencarbonat versetzt war.

Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20° C durchgeführt.

Als Potentialgrenzen wurden 40 mV und 1,0 V vs. Li/Li+ verwendet.

Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von C/20.

Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

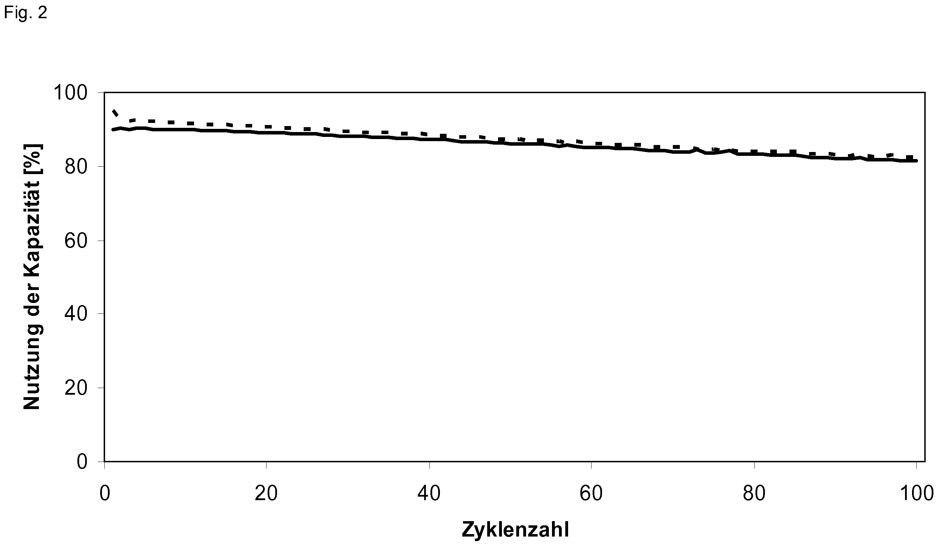

**Fig. 2** zeigt die Lade- (gestrichelte Line) und Entladekapazität (durchgezogene Linie) der Elektrodenbeschichtung aus **Beispiel 2** in Abhängigkeit von der Zyklenzahl bei einem Strom von C/10.

Die Elektrodenbeschichtung aus **Beispiel 2** zeigt eine reversible Kapazität von etwa 806 mAh/g, was einer Kapazität des Kompositmaterials nach **Beispiel 1** von 1007 mAh/g und einer 90%igen Nutzung der berechneten Materialkapazität im 1. Zyklus entspricht. Nach 100 Zyklen liegt der Kapazitätsrückhalt bei ca. 90 % von der Kapazität aus dem 1. Zyklus.

### Vergleichsbeispiel 4

### Si/G/C-Komposit mit aggregierten, nanoskaligen Silicium-Partikeln (nicht erfindungsgemäß)

Ein Si/G/C-Komposit mit aggregierten, nanoskaligen Siliciumpartikeln wurde analog Beispiel 1 hergestellt, allerdings wurde anstelle der Silicium-Nanopulver-Suspension mit D50 = 180 nm (NP180, nicht-aggregierte Partikel) ein trockenes, aus aggregierten Partikeln zusammengesetztes Si-Nanopulver (2,00 g; Nanostructured & Amorphous Materials) eingesetzt.

Nach der Carbonisierung wurden 5,86 g eines schwarzen, pulverigen Feststoffs erhalten (Carbonisierungsausbeute 82%).

Auf die Graphit-Oberflächen sind Strukturen aus aggregierten, sphärischen Primärpartikeln gebunden, welche ihrerseits mit amorphem Kohlenstoff beschichtet sind.

Elementare Zusammensetzung: Si 30,8 Gew.-%, Kohlenstoff 66,0 Gew.-% (G 40 Gew.-%; C 26 Gew.-%), O 3,2 Gew.-%.

Partikelgrößenverteilung (Statische Laserlichtstreuung; Horiba LA-950): D10: 2,55 µm, D50: 4,31 µm, D90: 6,83 µm.

Spezifische Oberfläche (BET): 152 m²/g.

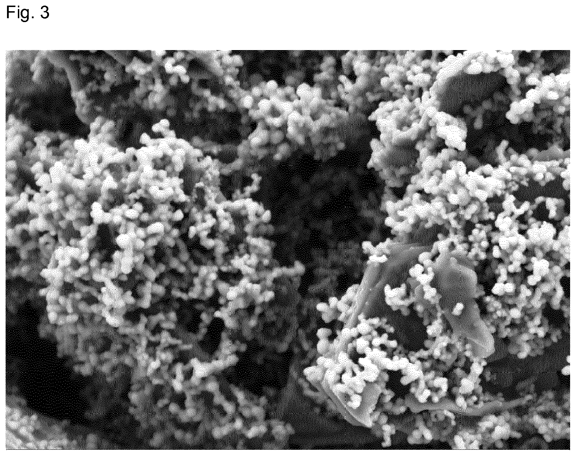

Materialkapazität (berechnet aus der elementaren Zusammensetzung und den Kapazitäten der enthaltenen Elemente): 1553 mAh/g
**Fig. 3** zeigt das REM-Bild des Si/G/C-Komposits gemäß **Vergleichsbeispiel 4** (5.000-fache Vergrößerung). Man erkennt deutlich die stark-aggregierten Si-Nanopartikel auf dem Graphit-Kern, welche ihrerseits mit amorphem Kohlenstoff beschichtet sind.

### Vergleichsbeispiel 5

### Herstellen einer Elektrodenbeschichtung (nicht erfindungsgemäß)

Das **Vergleichsbeispiel 5** bezieht sich auf die Herstellung und elektrochemische Charakterisierung einer Elektrodenbeschichtung mit Kompositmaterial, welches aggregierte Silicium-Partikel enthält.

2,00 g des Kompositmaterials mit aggregierten Silicium-Partikeln nach Vergleichsbeispiel 4 und 0,30 g Leitruß (Timcal, Super P Li) wurden in 20,00 g einer 1,0 Gew.-%igen Lösung von Natrium-Carboxymethylcellulose (Daicel, Grade 1380) in Wasser mittels Dissolver bei einer Umlaufgeschwindigkeit von 12 m/s dispergiert.

Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht.

Die so hergestellte Elektrodenbeschichtung wurde anschließend 60 min bei 80° C getrocknet.

Die mittlere Kapazität der Elektrodenbeschichtung beträgt 1242 mAh/g, das mittlere Flächengewicht 1,16 mg/cm².

### Vergleichsbeispiel 6

### Durchführen der elektrochemischen Untersuchungen (nicht erfindungsgemäß)

Die Elektrodenbeschichtung mit dem Komposit enthaltend aggregierte Silicium-Partikel aus **Vergleichsbeispiel 4** wurde - wie in **Beispiel 3** - beschrieben getestet.

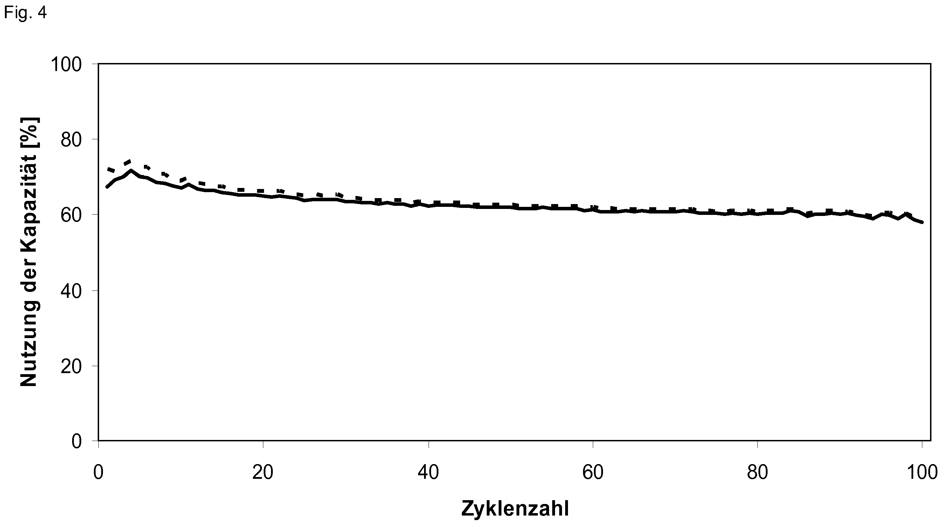

**Fig. 4** zeigt die Lade- (gestrichelte Line) und Entladekapazität (durchgezogene Linie) der Elektrodenbeschichtung aus **Vergleichsbeispiel 5** in Abhängigkeit von der Zyklenzahl bei einem Strom von C/10.

Die Elektrodenbeschichtung aus **Vergleichsbeispiel 5** zeigt eine reversible Kapazität von etwa 870 mAh/g, was einer Kapazität des Kompositmaterials nach **Vergleichsbeispiel 4** von 1088 mAh/g und einer 70%igen Nutzung der berechneten Materialkapazität im 1. Zyklus entspricht. Nach 100 Zyklen liegt der Kapazitätsrückhalt bei ca. 83 % von der Kapazität aus dem 1 Zyklus.

### Beispiel 7

### Nachweis der Aggregationsstabilität von Silicium-Nanopartikeln unter den in Beispiel 1 eingesetzten Temperaturbedingungen

Silicium-Nanopulver-Suspensionen in Ethanol mit verschiedenen Partikelgrößen (D50 = 100 nm, 150 nm, 200 nm) wurden unter vermindertem Druck vom Lösungsmittel befreit und getrocknet, und die resultierenden trockenen Silicium-Nanopulver wurden mittels Differenz-Thermoanalyse (DTA) im Temperaturbereich bis 1500° C untersucht.

In allen Fällen wurde im Rahmen der Messgenauigkeit der Schmelzpunkt von Silicium bei ∼1400° C gemessen.

Folglich kommt es bei den gewählten Verarbeitungs- bzw. Carbonisierungsbedingungen in **Beispiel 1** (700 bis 1400° C) nicht zu einem Schmelzen und einer daraus resultierenden Aggregation der Si-Partikel.

## Patentansprüche

1. Silicium/Graphit/Kohlenstoff-Komposite (Si/G/C-Komposite), **dadurch gekennzeichnet, dass** Graphit (G) und nicht-aggregierte, nanoskalige Silicium-Partikel (Si) enthalten sind, wobei die Silicium-Partikel in eine amorphe Kohlenstoffmatrix (C) eingebettet sind.

2. Silicium/Graphit/Kohlenstoff-Komposite nach Anspruch 1, **dadurch gekennzeichnet, dass** die Komposite einen oder mehrere Graphitkerne enthalten, die mit einer amorphen Kohlenstoffschicht versehen sind, wobei die amorphe Kohlenstoffschicht die Kohlenstoffmatrix (C) bildet und wobei in der amorphen Kohlenstoffschicht Silicium-Partikel eingebettet sind.

3. Silicium/Graphit/Kohlenstoff-Komposite nach Anspruch 1 oder 2, **dadurch gekennzeichnet, dass** die Komposite weiterhin eine oder mehrere Komponenten ausgewählt aus der Gruppe bestehend aus (Leit-)Ruß, amorphem Kohlenstoff, pyrolytischem Kohlenstoff, Soft-Carbon, Hard-Carbon, Carbon Nanotubes (CNTs) und Fullerene enthalten.

4. Silicium/Graphit/Kohlenstoff-Komposite nach einem der Ansprüche 1 bis 3, **dadurch gekennzeichnet, dass** die Komposite neben Si und Graphit wenigstens ein weiteres Aktivmaterial enthalten ausgewählt aus der Gruppe bestehend aus Li, Sn, Mg, Ag, Co, Ni, Zn, Cu, Ti, B, Sb, Al, Pb, Ge, Bi und Seltene Erden.

5. Silicium/Graphit/Kohlenstoff-Komposite nach einem der Ansprüche 1 bis 4, **dadurch gekennzeichnet, dass** die Komposite in Form von isolierten bzw. vereinzelten Partikel, lockeren Agglomeraten oder festen Aggregaten vorliegen.

6. Silicium/Graphit/Kohlenstoff-Komposite nach Anspruch 5, **dadurch gekennzeichnet, dass** die Komposite eine runde oder eine splitterförmige Form aufweisen oder in Form von Flakes vorliegen.

7. Silicium/Graphit/Kohlenstoff-Komposite nach einem der Ansprüche 1 bis 6, **dadurch gekennzeichnet, dass** eine durchschnittliche Kompositpartikelgröße kleiner als 1 mm, bevorzugt kleiner als 100 µm und besonders bevorzugt kleiner als 50 µm beträgt.

8. Silicium/Graphit/Kohlenstoff-Komposite nach einem der Ansprüche 1 bis 7, **dadurch gekennzeichnet, dass** die Komposite 10-90 Gew-% Silicium, 10-90 Gew -% Kohlenstoff und 0-20 Gew.-% Sauerstoff enthalten

9. Silicium/Graphit/Kohlenstoff-Komposite (Si/G/C-Komposite) nach Anspruch 1, **dadurch gekennzeichnet, dass**
die Silicium/Graphit/Kohlenstoff-Komposite bestehen aus Graphit (G) und
nicht-aggregierten, nanoskaligen Silicium-Partikeln (Si) und
gegebenenfalls einer oder mehreren Komponenten ausgewählt aus der Gruppe bestehend aus (Leit-)Ruß, amorphem Kohlenstoff, pyrolytischem Kohlenstoff, Soft-Carbon, Hard-Carbon, Carbon Nanotubes (CNTs) und Fullerene,
wobei die Silicium-Partikel in eine amorphe Kohlenstoffmatrix (C) eingebettet sind.

10. Silicium/Graphit/Kohlenstoff-Komposite (Si/G/C-Komposite) nach Anspruch 1, **dadurch gekennzeichnet, dass**
die Silicium/Graphit/Kohlenstoff-Komposite bestehen aus Graphit (G) und
nicht-aggregierten, nanoskaligen Silicium-Partikeln (Si),
wobei die Silicium-Partikel in eine amorphe Kohlenstoffmatrix (C) eingebettet sind.

11. Verfahren zur Herstellung von Silicium/Graphit/Kohlenstoff-Kompositen der Ansprüche 1 bis 10, **dadurch gekennzeichnet, dass**
nicht-aggregierte nanoskalige Siliciumpartikel (Si) zusammen mit Graphit (G) in eine Matrix enthaltend einen organischen Kohlenstoffprecursor (P) eingebettet oder
nicht-aggregierte nanoskalige Siliciumpartikel (Si) und Graphit (G) mit einem organischen Kohlenstoffprecursor (P) beschichtet werden,
um ein Si/G/P-Präkomposit zu erzeugen, und
das Si/G/P-Präkomposit thermisch behandelt wird, so dass der Precursor (P) in amorphen Kohlenstoff (C) überführt wird.

12. Verfahren nach Anspruch 11, **dadurch gekennzeichnet, dass** der Kohlenstoff-Precursor (P) ausgewählt wird aus der Gruppe bestehend aus elementarer Kohlenstoff, einfache Kohlenwasserstoffe, polyaromatische Kohlenwasserstoffe, Alkohole, Kohlenhydrate, organische Polymere und Silicone.

13. Verfahren nach Anspruch 12, **dadurch gekennzeichnet, dass** es sich beim Kohlenstoff-Precursor (P) um ein Resorcin-Formaldehyd-Harz, Lignin oder Polyacrylnitril handelt

14. Verfahren nach einem der Ansprüche 11 bis 13, **dadurch gekennzeichnet, dass** das Si-haltige Aktivmaterial und Graphit zusammen in eine Lösung eines Precursor-Monomers dispergiert werden, und das Monomer in Lösung so zu dem Precursor (P) polymerisiert wird, dass das Si-haltige Aktivmaterial und der Graphit vollständig in die Precursor-Matrix eingebettet werden.

15. Verfahren nach einem der Ansprüche 11 bis 14, **dadurch gekennzeichnet, dass** die Überfuhrung der Kohlenstoff-Precursoren (P) in anorganischen Kohlenstoff (C) thermisch durch anaerobe Carbonisierung bewerkstelligt wird.

16. Elektrodenmaterial fur Lithiumionenbatterien, **dadurch gekennzeichnet, dass** Silicium/Graphit/Kohlenstoff-Komposite nach einem der Ansprüche 1 bis 10 enthalten sind

17. Lithium-Ionen-Batterie mit einer ersten Elektrode als Kathode, mit einer zweiten Elektrode als Anode, mit einer zwischen beiden Elektroden angeordneten Membran als Separator, mit zwei Anschlüssen an den Elektroden, mit einem die genannten Teile aufnehmendes Gehäuse und mit einem Lithium-Ionen enthaltenden Elektrolyten, mit dem die beiden Elektroden getränkt sind, **dadurch gekennzeichnet, dass** die Anode ein Elektrodenmaterial nach Anspruch 16 umfasst.

## Claims

1. Silicon/graphite/carbon composite (Si/G/C composite), **characterized in that** graphite (G) and nonaggregated, nanoscale silicon particles (Si), are present, where the silicon particles are embedded in an amorphous carbon matrix (C).

2. Silicon/graphite/carbon composite according to Claim 1, **characterized in that** the composite comprises one or more graphite cores which are provided with an amorphous carbon layer, where the amorphous carbon layer forms the carbon matrix (C) and where silicon particles are embedded in the amorphous carbon layer.

3. Silicon/graphite/carbon composite according to Claim 1 or 2, **characterized in that** the composite further comprises one or more components selected from the group consisting of (conductive) carbon black, amorphous carbon, pyrolytic carbon, soft carbon, hard carbon, carbon nanotubes (CNTs), and fullerenes.

4. Silicon/graphite/carbon composite according to any of Claims 1 to 3, **characterized in that** the composite comprises, as well as Si and graphite, at least one further active material selected from the group consisting of Li, Sn, Mg, Ag, Co, Ni, Zn, Cu, Ti, B, Sb, Al, Pb, Ge, Bi, and rare earths.

5. Silicon/graphite/carbon composite according to any of Claims 1 to 4, **characterized in that** the composite is in the form of isolated or individual particles, loose agglomerates, or solid aggregates.

6. Silicon/graphite/carbon composite according to Claim 5, **characterized in that** the composite has a round or a splinterlike form or is in the form of flakes.

7. Silicon/graphite/carbon composite according to any of Claims 1 to 6, **characterized in that** an average composite particle size is less than 1 mm, preferably less than 100 µm, and more preferably less than 50 µm.

8. Silicon/graphite/carbon composite according to any of Claims 1 to 7, **characterized in that** the composite contains 10-90 wt% silicon, 10-90 wt% carbon, and 0-20 wt% oxygen.

9. Silicon/graphite/carbon composite (Si/G/C composite) according to Claim 1, **characterized in that** the silicon/graphite/carbon composite consists of graphite (G) and
nonaggregated, nanoscale silicon particles (Si) and optionally one or more components selected from the group consisting of (conductive) carbon black, amorphous carbon, pyrolytic carbon, soft carbon, hard carbon, carbon nanotubes (CNTs), and fullerenes,
where the silicon particles are embedded in amorphous carbon matrix (C).

10. Silicon/graphite/carbon composite (Si/G/C composite) according to Claim 1, **characterized in that** the silicon/graphite/carbon composite consists of graphite (G) and
nonaggregated, nanoscale silicon particles (Si) where the silicon particles are embedded in amorphous carbon matrix (C).

11. Method for producing silicon/graphite/carbon composites of Claims 1 to 10, **characterized in that** nonaggregated nanoscale silicon particles (Si) together with graphite (G) are embedded into a matrix comprising an organic carbon precursor (P),
or
nonaggregated nanoscale silicon particles (Si) and graphite (G) are coated with an organic carbon precursor (P),
to give an Si/G/P precomposite, and
the Si/G/P precomposite is heat-treated, so that the precursor (P) is converted into amorphous carbon (C).

12. Method according to Claim 11, **characterized in that** the carbon precursor (P) is selected from the group consisting of elemental carbon, simple hydrocarbons, polyaromatic hydrocarbons, alcohols, carbohydrates, organic polymers and silicones.

13. Method according to Claim 12, **characterized in that** the carbon precursor (P) is a resorcinol-formaldehyde resin, lignin, or polyacrylonitrile.

14. Method according to any of Claims 11 to 13, **characterized in that** the Si-containing active material and graphite are dispersed together into a solution of a precursor monomer, and the monomer in solution is polymerized to give the precursor (P) in such a way that the Si-containing active material and the graphite are embedded fully in the precursor matrix.

15. Method according to any of Claims 11 to 14, **characterized in that** the converting of the carbon precursors (P) into inorganic carbon (C) is accomplished thermally by anaerobic carbonization.

16. Electrode material for lithium ion batteries, **characterized in that** silicon/graphite/carbon composites according to any of Claims 1 to 10 are present.

17. Lithium ion battery having a first electrode as cathode, having a second electrode as anode, having a membrane as separator arranged between the two electrodes, having two connections to the electrodes, having a casing which accommodates the stated parts, and having an electrolyte which contains lithium ions and with which the two electrodes are impregnated, **characterized in that** the anode comprises an electrode material according to Claim 16.

## Revendications

1. Composites de silicium/graphite/carbone (composites Si/G/C), **caractérisés en ce qu'**ils contiennent du graphite (G) et des particules de silicium (Si) nanométriques non agglomérées, les particules de silicium étant enrobées dans une matrice amorphe de carbone (C).

2. Composites de silicium/graphite/carbone selon la revendication 1, **caractérisés en ce que** les composites contiennent un ou plusieurs noyaux de graphite, qui sont pourvus d'une couche de carbone amorphe, la couche de carbone amorphe formant la matrice de carbone (C) et des particules de silicium étant enrobées dans la couche de carbone amorphe.

3. Composites de silicium/graphite/carbone selon la revendication 1 ou 2, **caractérisés en ce que** les composites contiennent en outre un ou plusieurs composants choisis dans le groupe constitué par la suie (conductrice), le carbone amorphe, le carbone pyrolytique, le carbone doux, le carbone dur, les nanotubes de carbone (NTC) et les fullerènes.

4. Composites de silicium/graphite/carbone selon l'une quelconque des revendications 1 à 3, **caractérisés en ce que** les composites contiennent, outre le Si et le graphite, au moins un autre matériau actif choisi dans le groupe constitué par Li, Sn, Mg, Ag, Co, Ni, Zn, Cu, Ti, B, Sb, Al, Pb, Ge, Bi et les terres rares.

5. Composites de silicium/graphite/carbone selon l'une quelconque des revendications 1 à 4, **caractérisés en ce que** les composites se trouvent sous forme de particules isolées ou individuelles, d'agglomérats lâches ou d'agrégats solides.

6. Composites de silicium/graphite/carbone selon la revendication 5, **caractérisés en ce que** les composites présentent une forme ronde ou de paillettes ou se trouvent sous forme d'écailles.

7. Composites de silicium/graphite/carbone selon l'une quelconque des revendications 1 à 6, **caractérisés en ce qu'**une grosseur moyenne de particule composite est inférieure à 1 mm, de préférence inférieure à 100 µm et de manière particulièrement préférée inférieure à 50 µm.

8. Composites de silicium/graphite/carbone selon l'une quelconque des revendications 1 à 7, **caractérisés en ce que** les composites contiennent 10-90% en poids de silicium, 10-90% en poids de carbone et 0-20% en poids d'oxygène.

9. Composites de silicium/graphite/carbone (composites Si/G/C) selon la revendication 1, **caractérisés en ce que**
les composites de silicium/graphite/carbone sont constitués
de graphite (G) et
de particules de silicium (Si) nanométriques, non agglomérées et
le cas échéant d'un ou de plusieurs composants choisis dans le groupe constitué par la suie (conductrice), le carbone amorphe, le carbone pyrolytique, le carbone doux, le carbone dur, les nanotubes de carbone (NTC) et les fullerènes,
les particules de silicium étant enrobées dans une matrice amorphe de carbone (C).

10. Composites de silicium/graphite/carbone (composites Si/G/C) selon la revendication 1, **caractérisés en ce que**
les composites de silicium/graphite/carbone sont constitués
de graphite (G) et
de particules de silicium (Si) nanométriques, non agglomérées,
les particules de silicium étant enrobées dans une matrice amorphe de carbone (C).

11. Procédé pour la préparation de composites de silicium/graphite/carbone des revendications 1 à 10, **caractérisé en ce que**
des particules de silicium (Si) nanométriques non agglomérées sont incorporées, conjointement avec du graphite (G), dans une matrice contenant un précurseur (P) organique de carbone ou
des particules de silicium (Si) nanométriques, non agglomérées et du graphite (G) sont revêtus par un précurseur (P) organique de carbone
pour obtenir un précomposite de Si/G/P et
le précomposite de Si/G/P est traité thermiquement de manière telle que le précurseur (P) est transformé en carbone amorphe (C).

12. Procédé selon la revendication 11, **caractérisé en ce que** le précurseur (P) est choisi dans le groupe constitué par le carbone élémentaire, les hydrocarbures simples, les hydrocarbures polyaromatiques, les alcools, les hydrates de carbone, les polymères organiques et les silicones.

13. Procédé selon la revendication 12, **caractérisé en ce qu'**il s'agit, pour le précurseur (P) de carbone, d'une résine de résorcinol-formaldéhyde, de lignine ou de polyacrylonitrile.

14. Procédé selon l'une quelconque des revendications 11 à 13, **caractérisé en ce que** le matériau actif contenant du Si et le graphite sont dispersés conjointement dans une solution d'un monomère de précurseur et le monomère est polymérisé en solution en précurseur (P) de manière telle que le matériau actif contenant du Si et le graphite sont complètement enrobés dans la matrice de précurseur.

15. Procédé selon l'une quelconque des revendications 11 à 14, **caractérisé en ce que** la transformation des précurseurs (P) de carbone en carbone (C) inorganique est provoquée thermiquement par une carbonisation anaérobie.

16. Matériau d'électrode pour des batteries au lithium-ion, **caractérisé en ce qu'**il contient des composites de silicium/graphite/carbone selon l'une quelconque des revendications 1 à 10.

17. Batterie au lithium-ion présentant une première électrode en tant que cathode, une deuxième électrode en tant qu'anode, une membrane disposée entre les deux électrodes en tant que séparateur, deux raccords sur les électrodes, un boîtier logeant les pièces mentionnées et un électrolyte contenant des ions de lithium qui imprègne les deux électrodes, **caractérisée en ce que** l'anode comprend un matériau d'électrode selon la revendication 16.
